# EUROPÄISCHE PATENTSCHRIFT

(11) **EP 4 183 834 B1**
(45) Veröffentlichungstag und Bekanntmachung des Hinweises auf die Patenterteilung: **08.01.2025**
(21) Anmeldenummer: 21209353.8
(22) Anmeldetag: 19.11.2021
(51) Int. Cl.: C08L 67/02, C08L 67/04

(54) **ZUSAMMENSETZUNG ZUR HERSTELLUNG VON VERPACKUNGSMATERIALIEN**
COMPOUND FOR PRODUCING PACKAGING MATERIALS
COMPOSITION DESTINÉE À LA FABRICATION DE MATIÈRES D'EMBALLAGE

(43) Veröffentlichungstag der Anmeldung: 24.05.2023
(73) Patentinhaber: Rezemo GmbH, 70794 Filderstadt (DE)
(72) Erfinder: Reitze, Julian, 71332 Waiblingen (DE); Jarothe, Janina, 71332 Waiblingen (DE)
(74) Vertreter: Kudla, Christof

(56) Entgegenhaltungen:
- EP-A1- 2 913 362
- DE-A1- 102007 057 768

## Beschreibung

Die vorliegende Erfindung betrifft eine Zusammensetzung umfassend oder bestehend aus i) einem biobasierten Polymer, ii) einem Polyhydroxyalkanoat und iii) Fasern pflanzlicher Herkunft, wobei der Massenanteil an Polyhydroxyalkanoat 0,5 bis 30 % beträgt, bezogen auf das Gewicht der Zusammensetzung. Die vorliegende Erfindung betrifft zudem eine Verpackung bestehend aus oder umfassend eine erfindungsgemäße Zusammensetzung sowie die Verwendung eines Polyhydroxyalkanoats zur Reduktion der Sauerstoff- und/oder Wasserdampfdurchlässigkeit einer Mischung umfassend ein biobasiertes Polymer und Fasern pflanzlicher Herkunft. Die vorliegende Erfindung betrifft zudem die Verwendung einer erfindungsgemäßen Zusammensetzung zum Verpacken von Gütern, insbesondere Lebensmitteln, Kosmetika, Agrarprodukten, Medizinprodukten, Nahrungsergänzungsmitteln, Konsumgütern und chemischen Erzeugnissen. Die vorliegende Erfindung betrifft zudem ein Verfahren zur Herstellung eines Verpackungsmaterials aus einer erfindungsgemäßen Zusammensetzung.

An Verpackungsmaterialien werden üblicherweise hohe Anforderung bezüglich verschiedener Parameter gestellt. So müssen Verpackungsmaterialien üblicherweise gute mechanische Eigenschaften aufweisen, eine gute Verarbeitbarkeit aufweisen und gleichzeitig sollte eine kostengünstige Herstellung möglich sein. Bei empfindlichen Gütern, wie Lebensmitteln, Pharmaka oder Kosmetikprodukten, werden zudem geringe Sauerstoff- und Wasserdampfpermeabilitäten gewünscht, damit die verpackten Güter möglichst lange ohne Qualitätseinbußen haltbar sind. Im Hinblick auf die stets wachsende Verknappung an fossilen Rohstoffen und der darauffolgenden Verknappung von petrochemischen Ausgangsstoffe für zahlreichen Kunststoffe wird zudem gefordert, dass Verpackungsmaterialien ohne die Verwendung oder zumindest mit geringeren Anteilen an petrochemischen Ausgangsstoffen hergestellt werden können.

Zur Vermeidung von Verpackungsmaterialien, die aus petrochemischen Ausgangsstoffen hergestellt werden, sind in den vergangenen Jahren immer mehr biobasierte Polymere für technische/industrielle Anwendungen entwickelt worden. Diese biobasierten Polymere habend den Vorteil, dass sie teilweise oder vollständig aus nachwachsenden Rohstoffen hergestellt werden. Dies hat nicht nur den Vorteil, dass die fossilen Ressourcen geschont werden, sondern auch, dass diese Produkte eine verbesserte CO₂-Bilanz aufweisen.

Allerdings ist man bei biobasierten Polymeren üblicherweise auf bestimmte Ausgangsstoffe begrenzt und kann - zumindest derzeit - nicht sämtliche gewünschten Polymere herstellen bzw. die Eigenschaften biobasierter Polymere nur im begrenzten Rahmen durch eine Optimierung der Ausgangsstoffe einstellen. Entsprechend hat es sich gezeigt, dass biobasierte Polymere häufig schlechtere mechanische Eigenschaften, schlechtere Gas-Barriere-Eigenschaften oder schlechtere Wärmeformbeständigkeiten aufweisen als die bisher üblicherweise für diese Zwecke (z. B. als Verpackungsmaterial) eingesetzten Polymere aus petrochemischen Ausgangsstoffen.

Um die Barriereeigenschaften (z. B. Sauerstoffpermeabilität, Wasserdampfpermeabilität) von Kunststoffen auf Basis von biobasierten Polymeren zu verbessern, werden derzeit verschiedene Verfahren durchgeführt. So wird beispielsweise eine Metallisierung der Kunststoffe durchgeführt, bei der eine dünne Metallschicht auf den Kunststoff aufgetragen, meist aufgedampft, wird. Alternativ wird auch auf Mehrschichtverbünde zurückgegriffen, bei denen verschieden Schichten von unterschiedlichen Materialien miteinander kombiniert werden. Auch die Beschichtung mit mineralischen Materialien ist bekannt.

In der WO2014161653A1 wird ein Behälter für ein Lebensmittelprodukt, Getränk oder pharmazeutisches Produkt beschrieben, der einen formstabilen Körper, eine Barrierefolie und gegebenenfalls auch eine Lebensmittelschutzschicht aufweist. Die Barrierefolie weist dabei eine Dicke von weniger als 500 µm auf und besteht aus einem Barrierepolymer ausgewählt aus der Gruppe bestehend aus Flüssigkristallpolymeren (LCP), vernetzte thermoplastische Polymere auf Epoxidbasis, Nylon-MXD6, vernetzter Polyvinylalkohol (PVOH), vernetzter Ethylenvinylalkohol (EVOH), Polyglycolid (PGA) und Mischungen davon.

Das Metallisieren oder die Verwendung von Mehrschichtverbünden birgt den Nachteil, dass zusätzliche Prozessschritte notwendig werden, welche die Komplexität des Herstellungsverfahrens erhöhen und hierdurch zu höheren Kosten führen oder Materialien erzeugt werden, die nicht recyclingfähig sind, da sich die einzelnen Schichten nicht mehr voneinander trennen lassen.

Um die Eigenschaften (z.B. Barriereeigenschaften oder mechanische Eigenschaften) der Materialien zu optimieren wird teilweise auf Polymerblends zurückgegriffen, bei denen unterschiedliche Polymere vermischt und somit miteinander kombiniert werden.

In der EP2582757B1 wird ein Verfahren zur Herstellung von Blends aus Polylactiden und thermoplastischen Polyurethanen beschrieben, die eine verbesserte Zähigkeit bei einer Verminderung der Sprödigkeit zeigen, und zudem erhöhte Reißdehnungen bei ausreichender Festigkeit aufweisen. DE 10 2007 057768 A1 offenbart ein System, das zur Herstellung von Behältern und Verpackungsmaterialen verwendet werden kann. Blends aus 30% BioPolyester-urethan und 70% PHB bzw. PHB-co-HV und Fasermaterialen wie Holzfasern werden offenbart.

In der Praxis ist es allerdings schwierig, die angestrebte Eigenschaftskombination durch Mischungen zu erreichen. Die Eigenschaften von Mischungen setzen sich in der Regel nicht linear additiv aus den Eigenschaften der Einzelkomponenten zusammen. Beim Mischen eines ersten Materials, das eine erste gewünschte Eigenschaft aufweist, mit einem zweiten Material, das eine zweite gewünschte Eigenschaft aufweist, resultiert üblicherweise nicht ein Blend, das beide gewünschten Eigenschaften im Verhältnis der Einzelkomponenten aufweist. Weiterhin sind Eigenschaften wie a) Sauerstoff- und Wasserdampfpermeabilität und b) mechanische Eigenschaften häufig gegenläufig. Weiterhin gehen bei vielen Polymermischungen gewisse Eigenschaften der Einzelkomponenten wie Transparenz oder Barrierewirkung zumindest teilweise verloren.

Der vorliegenden Erfindung liegt somit die Aufgabe zugrunde, Materialien für die Herstellung von Verpackungsmaterialien zur Verfügung zu stellen, die vollständig oder zumindest teilweise aus biobasierten Materialien hergestellt werden können und dabei eine Verbesserte Sauerstoff- und Wasserdampfpermeabilität und guten mechanischen Eigenschaften, wie hoher Zug- und Durchstoßfestigkeit, bereitzustellen.

Diese Aufgabe wird erfindungsgemäß gelöst durch eine Zusammensetzung umfassend oder bestehend aus
i) einem biobasierten Polymer,
ii) einem Polyhydroxyalkanoat
   und
iii) Fasern pflanzlicher Herkunft,
wobei der Massenanteil an Polyhydroxyalkanoat 0,5 bis 30 % beträgt, bezogen auf das Gewicht der Zusammensetzung.

Es hat sich überraschenderweise gezeigt, dass durch den Zusatz von zumindest einem Polyhydroxyalkanoat und Fasern pflanzlicher Herkunft die mechanischen Eigenschaften (insbesondere die Zugfestigkeit und Wärmeformbeständigkeit) und die Sauerstoff- und Wasserdampfpermeabilität der resultierenden Zusammensetzung signifikant verbessert werden kann.

Optional kann die erfindungsgemäße Zusammensetzung auch in der Polymerverarbeitung übliche Additive enthalten.

Bei Polyhydroxyalkanoaten (PHA) handelt es sich um natürlich vorkommende wasserunlösliche und lineare Biopolyester, die von vielen Bakterien als Reservestoffe für Kohlenstoff und Energie gebildet werden. Die Gewinnung von Polyhydroxyalkanoaten erfolgt dabei üblicherweise aus Biomassen. Hierdurch ist es möglich, das erfindungsgemäße Zusammensetzungen neben dem biobasierten Polymer lediglich Komponenten aufweisen, die aus biobasiertem d.h. nachwachsenden Rohstoffen gewonnen werden. Es ist erfindungsgemäß besonders bevorzugt, wenn es sich bei den Polyhydroxyalkanoaten um biobasierte Polyhydroxyalkanoate handelt.

Ein Material (z. B. Polymer) wird im Rahmen der vorliegenden Erfindung als biobasiert verstanden, wenn es zu zumindest 50 Gew.-%, vorzugsweise mehr als 75 Gew.-%, weiter bevorzugt mehr als 95 Gew.-%, bezogen auf das Gesamtgewicht des biobasierten Materials, aus Substanzen gewonnen wird, bei denen es sich um nachwachsende Substanzen handelt oder die aus nachwachsenden Substanzen gewonnen wurden. Der biobasierte Anteil lässt sich mithilfe der Radiocarbonmethode nach der DIN EN 16640:2017-08 bestimmen. Bei dieser Bestimmungsmethode wird ausgenutzt, dass in der Atmosphäre ständig geringe Mengen des radioaktiven Kohlenstoffisotops ¹⁴C gebildet werden. Dieses Isotop gelangt als ¹⁴CO₂ in Pflanzen und Mikroorganismen und wird anschließend in verschiedenen Biomassen weiterverwendet. Aufgrund des radioaktiven Zerfalls von ¹⁴C lässt sich über den Anteil an ¹⁴C ein Rückschluss darauf ziehen, wie alt die für die Herstellung der Materialien verwendeten Ausgangsverbindungen sind und somit, ob ein Material aus frischer Biomasse hergestellt wurde oder aus fossilen Kohlenstoffquellen, wie z.B. Erdöl. Der Begriff "biobasiert" wird im Rahmen der vorliegenden Erfindung so verwendet, wie er in der DIN EN 16640:2017-08 definiert wird. Biobasierte Materialien sind somit vollständig oder teilweise von Biomassen abgeleitet. Unter einem biobasierten Material werden im Rahmen der vorliegenden Erfindung beispielsweise Pflanzen, Mikroorganismen oder Tiere sowie deren Stoffwechselprodukte und Teile verstanden, aber auch Materialien, die daraus durch mechanische und/oder chemische Umformung gewonnen werden. Ein biobasiertes Polymer ist somit ein Polymer, dass zu zumindest 50 Gew.-%, vorzugsweise mehr als 75 Gew.-%, weiter bevorzugt mehr als 95 Gew.-%, (ganz besonders bevorzugt vollständig) bezogen auf das Gesamtgewicht des biobasierten Materials, aus nachwachsenden Substanzen gewonnen bzw. abgeleitet wird. Es ist erfindungsgemäß bevorzugt, wenn das biobasierte Polymer einen nach DIN EN 16640:2017-08, Verfahren B bestimmten prozentualer Anteil an rezentem Kohlenstoff von zumindest 50 %, vorzugsweise mehr als 75 %, weiter bevorzugt mehr als 95 %, (ganz besonders bevorzugt mehr als 99,8 %) aufweist, bezogen auf das Gesamtgewicht des biobasierten Polymers. Bei Polylactid handelt es sich beispielsweise um ein biobasiertes Polymer, wenn es aus Milchsäuremonomeren gebildet wird, die biotechnologisch über eine Fermentation von Kohlenhydraten (Zucker, Stärke) hergestellt wird. Ein Polylactid, das einen Anteil an rezentem Kohlenstoff von weniger als 50 % aufweist, beispielsweise weil es synthetisch aus petrochemischen Rohstoffen (Acetaldehyd) hergestellt wird, wird nicht als biobasiertes Polymer verstanden. Die Bestimmung des Anteils des biobasierten Polymers erfolgt nach DIN EN 16640:2017-08, Verfahren B.

Wie allgemein üblich wird auch im Rahmen dieses Textes unter biobasierten Materialien kein Erdöl oder andere fossile Quellen verstanden, auch wenn diese in geologischer Vorzeit aus Abbauprodukten von toten Pflanzen und Tieren entstanden sind.

Im Rahmen der vorliegenden Erfindung werden Polyhydroxyalkanoate oder Fasern pflanzlicher Herkunft nicht als biobasierte Polymere der Komponenten i) verstanden bzw. dieser Komponente zugeordnet.

Eine Zusammensetzung ist erfindungsgemäß bevorzugt, wenn sie zu mehr als 20 Gew.-%, vorzugsweise mehr als 40 Gew.-%, weiter bevorzugt zu mehr als 60 Gew.-%, weiter bevorzug zu mehr als 80 Gew.-% aus biobasierten Bestandteilen besteht, bestimmt nach DIN EN 16640:2017-08, Verfahren B und bezogen auf das Gesamtgewicht der Zusammensetzung. Ganz besonders bevorzugt ist eine erfindungsgemäße Zusammensetzung, die vollständig aus biobasierten Bestandteilen besteht.

In einer bevorzugten Ausgestaltung der vorliegenden Erfindung handelt es sich bei dem biobasierten Polymer um ein Polymer, ausgewählt aus der Gruppe bestehend aus Polylactid (PLA), Polybutylensuccinat (PBS), Polyethylen (Bio-PE), Polyethylenterephthalat (Bio-PET), Polypropylen (Bio-PP), Polytrimethylenterephthalat (PTT), Polyamid (PA), Polyurethan (PU), Thermoplastische Stärke (TPS), Thermoplastische Elastomere (TPE), Celluloseacetat (CA) und Polyethylenfuranoat (PEF).

Eigene Untersuchungen haben überraschenderweise gezeigt, dass diese ausgewählten biobasierten Polymere besonders gute Eigenschaften in Kombination mit Polyhydroxyalkanoat und Fasern pflanzlicher Herkunft aufweisen. Durch den Zusatz von Polyhydroxyalkanoat zu den biobasierten Polymeren wird die Sauerstoff- und Wasserdampfpermeabilität der resultierenden Zusammensetzung verbessert, währen durch den Zusatz von Fasern pflanzlicher Herkunft die mechanischen Eigenschaften und die Sauerstoffpermeabilität verbessert werden. Hierbei wurde überraschenderweise gefunden, dass die sonstigen Eigenschaften der biobasierten Polymere nicht oder nicht signifikant verschlechtert werden.

Eigene Untersuchungen haben überraschenderweise gezeigt, dass durch den Zusatz von pflanzlichen Fasern zu den oben aufgeführten biobasierten Polymeren die Sauerstoffpermeabilität des resultierenden Materials reduziert werden kann. Dies ist in der Hinsicht überraschend, da der Fachmann beim Zusatz von pflanzlichen Fasern zu einem homogenen Polymer eine Erhöhung der Sauerstoffpermeabilität erwarten würde. Auch der Zusatz eines Polyhydroxyalkanoats zu den oben aufgeführten biobasierten Polymeren führt zu einer Reduktion der Sauerstoffpermeabilität. Setzt man zu den oben aufgeführten biobasierten Polymeren sowohl pflanzlichen Fasern als auch ein Polyhydroxyalkanoat hinzu, reduziert sich die Sauerstoffpermeabilität stärker, als man es aus der Summe dieser einzelnen Komponenten erwarten würde. Die Kombination aus pflanzlichen Fasern und Polyhydroxyalkanoat weist bei biobasierten Polymeren (und insbesondere bei den oben aufgeführten biobasierten Polymeren) bezüglich der Sauerstoffpermeabilität einen synergistischen Effekt auf. Die Wirkung der pflanzlichen Fasern und des Polyhydroxyalkanoats potenziert sich hierbei.

In den vergangenen Jahren wird der Fokus nicht nur lediglich auf die Herstellung und Verwendung von Verpackungsmaterialien gelegt, sondern auch auf eine möglichst preiswerte und umweltfreundliche Entsorgung dieser nach deren Benutzung. So ist es nicht nur wünschenswert, wenn Verpackungsmaterialien aus nachwachsenden Rohstoffen gewonnen werden können, sondern wenn diese Materialien auch biologisch abgebaut werden können und sich somit zersetzen, wenn sie in die Umwelt gelangen.

Eine Zusammensetzung ist erfindungsgemäß besonders bevorzugt, wenn es sich bei dem biobasierten Polymer um ein Polymer handelt, ausgewählt aus der Gruppe bestehend aus Polylactid (PLA), Polybutylensuccinat (PBS) und Thermoplastische Stärke (TPS). Diese biobasierten Polymere haben den zusätzlichen Vorteil, dass sie nicht nur biobasiert sind, sondern auch biologisch abgebaut werden können.

Unter einer biologischen Abbaubarkeit bezeichnet man das Vermögen organischer Materialien (z.B. Polymere), biologisch, also durch Lebewesen (insbesondere Saprobionten) oder deren Enzyme zersetzt zu werden.

Es ist erfindungsgemäß besonders bevorzugt, wenn es sich bei dem biobasierten Polymer um Polylactid (PLA) handelt. Eigene Untersuchungen haben ergeben, dass erfindungsgemäße Zusammensetzungen umfassend oder bestehend aus i) Polylactid (PLA), ii) einem Polyhydroxyalkanoat und iii) Fasern pflanzlicher Herkunft, eine besonders gute Sauerstoffbarriere aufweisen. Es hat sich dabei gezeigt, dass der synergistische Effekt bezüglich der Sauerstoffpermeabilität von Polyhydroxyalkanoat und Fasern pflanzlicher Herkunft in Kombination mit biobasiertem Polylactid besonders stark ausgeprägt ist. Entsprechende Zusammensetzungen zeigen zudem eine besonders hohe Zugfestigkeit, eine hohe Wärmeformbeständigkeit und eine geringe Wasserdampfpermeabilität auf.

Eine erfindungsgemäße Zusammensetzung ist bevorzugt, bei der es sich bei dem Polylactid um das Polylactid der (S)-Milchsäure, Polylactid der (R)-Milchsäure oder Gemische (vorzugsweise Racemat) hieraus handelt.

Eine erfindungsgemäße Zusammensetzung ist bevorzugt, wobei das biobasierte Polymer eine mittlere molare Masse im Bereich von 1.000 g/mol bis 850.000 g/mol aufweist, vorzugsweise im Bereich von 5.000 g/mol bis 500.000 g/mol aufweist, besonders bevorzugt im Bereich von 50.000 g/mol bis 250.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Eine erfindungsgemäße Zusammensetzung ist bevorzugt, wobei das biobasierte Polymer eine mittlere molare Masse von größer gleich 1.000 g/mol aufweist, vorzugsweise von grö-βer gleich 5.000 g/mol aufweist, besonders bevorzugt von größer gleich 50.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Eine erfindungsgemäße Zusammensetzung ist bevorzugt, wobei das biobasierte Polymer eine mittlere molare Masse von kleiner gleich 850.000 g/mol aufweist, vorzugsweise von kleiner gleich 500.000 g/mol aufweist, besonders bevorzugt von kleiner gleich 250.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Eigene Untersuchungen haben gezeigt, dass in vielen Fällen die mittlere molare Masse der biobasierten Polymere einen Einfluss auf die Werkstoffeigenschaften aufweist, bei zu geringen mittleren molaren Massen sind die mechanischen Eigenschaften und die Barriereeigenschaften nicht ausreichend hoch. Bei zu großen mittleren molaren Massen lässt sich das Material häufig nicht gut Verarbeiten, da die Viskosität des Materials in der Schmelze zu hoch ist.

Eine erfindungsgemäße Zusammensetzung ist bevorzugt, wobei der Massenanteil des biobasierten Polymers größer gleich 20 % beträgt, vorzugsweise größer gleich 30 % beträgt, besonders bevorzugt größer gleich 35 % beträgt, bezogen auf das Gewicht der Zusammensetzung. Für den Fall, dass mehrere biobasierte Polymere vorliegen, gelten die vorgenannten Massenanteile für die Gesamtmenge aller biobasierten Polymere der Komponente i), wobei Polyhydroxyalkanoat oder Fasern pflanzlicher Herkunft nicht als biobasierte Polymere der Komponente i) gezählt werden.

Eine erfindungsgemäße Zusammensetzung ist bevorzugt, wobei der Massenanteil des biobasierten Polymers kleiner gleich 80 % beträgt, vorzugsweise kleiner gleich 70 % beträgt, besonders bevorzugt kleiner gleich 60 % beträgt, bezogen auf das Gewicht der Zusammensetzung. Für den Fall, dass mehrere biobasierte Polymere vorliegen, gelten die vorgenannten Massenanteile für die Gesamtmenge aller biobasierten Polymere der Komponente i), wobei Polyhydroxyalkanoat oder Fasern pflanzlicher Herkunft nicht als biobasierte Polymer der Komponente i) gezählt werden.

Eine erfindungsgemäße Zusammensetzung ist bevorzugt, wobei der Massenanteil des biobasierten Polymers 20 bis 80 % beträgt, vorzugsweise 30 bis 70 % beträgt, besonders bevorzugt 35 bis 60 % beträgt, bezogen auf das Gewicht der Zusammensetzung. Für den Fall, dass mehrere biobasierte Polymere vorliegen, gelten die vorgenannten Massenanteile für die Gesamtmenge aller biobasierten Polymere der Komponente i).

Eine erfindungsgemäße Zusammensetzung ist bevorzugt, wobei das Polyhydroxyalkanoat ausgewählt ist aus der Gruppe bestehend aus Poly(3-hydroxypropionat) (PHP), Poly(3-hydroxybutyrat) (PHB, P3HB) (bevorzugt ist hier das Poly-(R)-3-hydroxybutyrat), Poly(3-hydroxyvalerat), (PHV), Poly(3-hydroxyhexanoat) (PHHx), Poly(3-hydroxyheptanoat) (PHH), Poly(3-hydroxyoctanoat) (PHO), Poly(3-hydroxynonanoat) (PHN), Poly(3-hydroxy-decanoat) (PHD), Poly(3-hydroxyundecanoat) (PHUD), Poly(3-hydroxydodecanoat) (PHDD), Poly(3-hydroxytetradecanoat) (PHTD), Poly(3-hydroxypentadecanoat) (PHPD), Poly(3-hydroxyhexadecanoat) (PHHxD), Poly(hydroxybutyrat-co-hydroxyvalerat) (PHBV), Poly((R)-3-hydroxybutyrat-co-(R)-3-hydroxyhexanoat) (PHBH) und Gemischen der vorgenannten Polyhydroxyalkanoate, wobei als Polyhydroxyalkanoat Poly(3-hydroxybutyrat) (PHB, P3HB) bevorzugt ist.

Eigene Untersuchungen haben gezeigt, dass durch den Zusatz dieser Polyhydroxyalkanoate die Sauerstoff- und Wasserdampfpermeabilität von Gemischen aus biobasierten Polymeren und Fasern pflanzlicher Herkunft signifikant reduziert werden kann. Besonders ausgeprägt ist dies bei der Verwendung von Poly(3-hydroxybutyrat) und insbesondre in Kombination mit Polylactid.

Erfindungsgemäße Zusammensetzung sind bevorzugt, wobei das Polyhydroxyalkanoat eine mittlere molare Masse im Bereich von 1.000 g/mol bis 1.500.000 g/mol aufweist, vorzugsweise im Bereich von 5.000 g/mol bis 1.000.000 g/mol aufweist, besonders bevorzugt im Bereich von 50.000 g/mol bis 850.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Erfindungsgemäße Zusammensetzung sind bevorzugt, wobei das Polyhydroxyalkanoat eine mittlere molare Masse von größer gleich 1.000 g/mol aufweist, vorzugsweise von grö-βer gleich 5.000 g/mol aufweist, besonders bevorzugt von größer gleich 50.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Erfindungsgemäße Zusammensetzung sind bevorzugt, wobei das Polyhydroxyalkanoat eine mittlere molare Masse von kleiner gleich 1.500.000 g/mol aufweist, vorzugsweise von kleiner gleich 1.000.000 g/mol aufweist, besonders bevorzugt von kleiner gleich 850.000 g/mol aufweist, bestimmt mittels analytischer Gel-Permeations-Chromatographie mit Chloroform /THF (70/30) als Laufmittel und unter Verwendung von PMMA als Standard und einem Brechungsindex-Detektor.

Erfindungsgemäße Zusammensetzungen sind bevorzugt, wobei der Massenanteil an Polyhydroxyalkanoat(en) vorzugsweise größer gleich 1 % beträgt, besonders bevorzugt größer gleich 2 % beträgt, bezogen auf das Gewicht der Zusammensetzung. Für den Fall, dass mehrere Polyhydroxyalkanoate vorliegen, gelten die vorgenannten Massenanteile für die Gesamtmenge aller Polyhydroxyalkanoate der Komponente ii).

Erfindungsgemäße Zusammensetzungen sind bevorzugt, wobei der Massenanteil an Polyhydroxyalkanoat(en) vorzugsweise kleiner gleich 20 % beträgt, besonders bevorzugt kleiner gleich 15 % beträgt, bezogen auf das Gewicht der Zusammensetzung. Für den Fall, dass mehrere Polyhydroxyalkanoate vorliegen, gelten die vorgenannten Massenanteile für die Gesamtmenge aller Polyhydroxyalkanoate der Komponente ii).

Erfindungsgemäße Zusammensetzungen sind bevorzugt, wobei der Massenanteil an Polyhydroxyalkanoat(en) vorzugsweise 1 bis 20 % beträgt, besonders bevorzugt 2 bis 15 % beträgt, bezogen auf das Gewicht der Zusammensetzung. Für den Fall, dass mehrere Polyhydroxyalkanoate vorliegen, gelten die vorgenannten Massenanteile für die Gesamtmenge aller Polyhydroxyalkanoate der Komponente ii).

Eigene Untersuchungen haben gezeigt, dass bei zu geringen Massenanteilen an Polyhydroxyalkanoat die Verbesserung der Sauerstoff- und/oder Wasserdampfpermeabilität häufig nicht ausreichend hoch ist. Während bei zu hohen Massenanteil über 30 % die Sauerstoff- und/oder Wasserdampfpermeabilität nur noch geringfügig verbessert wird, allerdings die Kosten und mechanischen Eigenschaften der Zusammensetzung verschlechtert werden.

Unter Fasern pflanzlicher Herkunft werden im Rahmen der vorliegenden Erfindung Fasern verstanden, die direkt aus Pflanzen oder Pflanzenteilen gewonnen werden und Regeneratfasern. Bei Regeneratfasern handelt es sich um Fasern, die aus Pflanzen(teilen) über einen chemischen Prozess hergestellt werden. Beispielsweise handelt es sich bei regeneriertern Cellulose-Fasern um Regeneratfasern.

Zusammensetzungen sind erfindungsgemäß bevorzugt, wobei der Massenanteil an Fasern pflanzlicher Herkunft größer gleich 5 % beträgt, vorzugsweise größer gleich 15 % beträgt, besonders bevorzugt größer gleich 35 % beträgt, bezogen auf das Gesamtgewicht der Zusammensetzung.

Zusammensetzungen sind erfindungsgemäß bevorzugt, wobei der Massenanteil an Fasern pflanzlicher Herkunft kleiner gleich 80 % beträgt, vorzugsweise kleiner gleich 75 % beträgt, besonders bevorzugt kleiner gleich 65 % beträgt, bezogen auf das Gesamtgewicht der Zusammensetzung.

Zusammensetzungen sind erfindungsgemäß bevorzugt, wobei der Massenanteil an Fasern pflanzlicher Herkunft 5 bis 80 % beträgt, vorzugsweise 15 bis 75 % beträgt, besonders bevorzugt 35 bis 65 % beträgt, bezogen auf das Gesamtgewicht der Zusammensetzung.

Eigene Untersuchungen haben gezeigt, dass bei zu hohen Massenanteilen an Faser pflanzlicher Herkunft die Verarbeitbarkeit der Zusammensetzungen häufig schwierig wird, während bei zu geringen Massenanteilen die positiven Effekte, die von den Fasern ausgehen häufig nur schwach ausgeprägt sind.

Zusammensetzungen sind erfindungsgemäß bevorzugt, wobei die Fasern pflanzlicher Herkunft ausgewählt sind aus der Gruppe bestehend aus Holzfasern, Regeneratfasern, Zellstofffasern, Samenfasern, Bastfasern und Hartfasern.

Hierbei ist es erfindungsgemäß bevorzugt, wenn es sich bei den Holzfasern um Nadelholz- , Laubholz-, Strohzellstofffasern oder Mischungen daraus handelt und/oder wobei es sich bei den Zellstofffasern um Fasern aus Kiefern-, Birken, Pappeln, Fichten-, Buchen-, Eukalyptusholz oder Gemische aus den vorbenannten handelt.

Zusammensetzung sind erfindungsgemäß bevorzugt, wobei die Fasern pflanzlicher Herkunft Lignocellulose umfassen oder aus Lignocellulose bestehen.

Eine erfindungsgemäße Zusammensetzung ist besonders bevorzugt, umfassend oder bestehend aus
i) 20 bis 80 Gew.-%, vorzugsweise 30 bis 70 Gew.-%, weiter bevorzugt 35 bis 60 Gew.-% eines oder mehrerer biobasierten Polymere,
ii) 0,5 bis 30 Gew.-%, vorzugsweise 1 bis 20 Gew.-%, weiter bevorzugt 5 bis 15 Gew.-% eines oder mehrerer Polyhydroxyalkanoate
   und
iii) 5 bis 80 Gew.-%, vorzugsweise 15 bis 75 Gew.-%, weiter bevorzugt 35 bis 65 Gew.-% Fasern pflanzlicher Herkunft.

Eine erfindungsgemäße Zusammensetzung ist besonders bevorzugt umfassend oder bestehend aus
i) 20 bis 80 Gew.-%, vorzugsweise 30 bis 70 Gew.-%, weiter bevorzugt 35 bis 60 Gew.-% Polylactid,
ii) 0,5 bis 30 Gew.-%, vorzugsweise 1 bis 20 Gew.-%, weiter bevorzugt 5 bis 15 Gew.-% Poly(3-hydroxybutyrat)
   und
iii) 5 bis 80 Gew.-%, vorzugsweise 15 bis 75 Gew.-%, weiter bevorzugt 35 bis 65 Gew.-% Fasern pflanzlicher Herkunft.

Ein weiterer Aspekt der vorliegenden Erfindung betrifft eine Verpackung bestehend aus oder umfassend eine erfindungsgemäße Zusammensetzung. Unter einer Verpackung wird im Rahmen der vorliegenden Erfindung ein Artikel verstanden, der zum Verpacken von Produkten dient. Auch Teile einer Verpackung werden im Rahmen der vorliegenden Erfindung als Verpackung verstanden, sofern es sich um eine abgeschlossene Einheit handelt. So wird beispielsweise auch jeweils ein Flaschenschraubverschluss oder eine Flasche als Verpackung verstanden, auch wenn üblicherweise die Kombination aus Flasche und Flaschenschraubverschluss zum Verpacken von Flüssigkeiten eingesetzt wird.

Eine erfindungsgemäße Verpackung ist bevorzugt, wobei es sich bei der Verpackung um einen Portionsbehälter, einen Tiegel, eine Dose, eine Tube, eine Flasche, Verschlüsse, Schraubverschlüsse oder einen Beutel handelt.

Eine erfindungsgemäße Verpackung ist bevorzugt, wobei es sich bei der Verpackung um eine Kaffeekapsel handelt.

Eine erfindungsgemäße Verpackung ist bevorzugt, wobei es sich bei der Verpackung um einen Portionsbehälter (1) zum Bevorraten eines Ausgangsstoffs, insbesondere zur Zubereitung eines Getränks aus einem Getränkeausgangsstoff durch Durchfluss von Wasser durch den Portionsbehälter (1), mit einem Behälterkörper (2) handelt, der ein Volumen (3) zum Bevorraten des Ausgangsstoffs begrenzt und aus einer erfindungsgemäßen Zusammensetzung hergestellt ist.

Es ist erfindungsgemäß bevorzugt, wenn die Verpackung durch Urformen, vorzugsweise zur Spritzgießen, aus einer erfindungsgemäßen Zusammensetzung hergestellt ist.

Es ist erfindungsgemäß bevorzugt, wenn es sich bei der Verpackung nicht um einen Schichtverbundwerkstoff (auch Schichtstoff oder Laminat genannt) handelt. Unter einem Schichtverbundwerkstoff werden Materialien verstanden, die aus mehreren Lagen unterschiedlichen Materials bestehen, wobei Aufdrucke (z. B. Text oder Grafik) auf der Verpackung, im Rahmen der vorliegenden Erfindung nicht als Lage verstanden werden.

Es ist erfindungsgemäß bevorzugt, wenn die die erfindungsgemäße Zusammensetzung in der Verpackung nicht mit weiteren Schichten, z. B. Metallschichten oder Kunststoffschichten beschichtet ist.

Eine Verpackung ist erfindungsgemäß bevorzugt, wobei die Verpackung zu mehr als 20 Gew.-%, vorzugsweise mehr als 40 Gew.-%, weiter bevorzugt zu mehr als 60 Gew.-%, weiter bevorzug zu mehr als 80 Gew.-% aus biobasierten Bestandteilen besteht, bestimmt nach DIN EN 16640:2017-08, Verfahren B und bezogen auf das Gesamtgewicht der Verpackung. Ganz besonders bevorzugt ist eine erfindungsgemäße Verpackung, die vollständig aus biobasierten Bestandteilen besteht.

Eine Verpackung ist erfindungsgemäß bevorzugt, wobei die erfindungsgemäße Zusammensetzung in der Verpackung zu mehr als 20 Gew.-%, vorzugsweise mehr als 40 Gew.-%, weiter bevorzugt zu mehr als 60 Gew.-%, weiter bevorzug zu mehr als 80 Gew.-% aus biobasierten Bestandteilen besteht, bestimmt nach DIN EN 16640:2017-08, Verfahren B und bezogen auf das Gesamtgewicht der erfindungsgemäßen Zusammensetzung in der Verpackung.

Ein weiterer Aspekt der vorliegenden Erfindung betrifft ein Verfahren zur Herstellung einer Verpackung, vorzugsweise zur Herstellung einer Verpackung bestehend aus einer erfindungsgemäßen Zusammensetzung, umfassend die folgenden Schritte:
a) Herstellen oder Bereitstellen eines biobasierten Polymers,
b) Herstellen oder Bereitstellen eines Polyhydroxyalkanoats,
c) Herstellen oder Bereitstellen von Fasern pflanzlicher Herkunft,
d) Compoundieren der in den Schritten a) bis c) hergestellten oder bereitgestellten Komponenten, vorzugsweise in einem Extruder, sodass eine (vorzugsweise homogene) Formmischung entsteht
   und
e) Urformen der in Schritt d) hergestellten Formmischung zu einer Verpackung, vorzugsweise mittels Spritzgießen,
wobei der Massenanteil an Polyhydroxyalkanoat 0,5 bis 30 % beträgt, bezogen auf das Gewicht der in Schritt d) hergestellten Formmischung.

Ein Verfahren ist erfindungsgemäß bevorzugt, wobei die Komponenten in Schritt d über die Glasübergangstemperatur (Tg) des in Schritt a) hergestellten oder bereitgestellten biobasierten Polymers und/oder des in Schritt b) hergestellten oder bereitgestellten Polyhydroxyalkanoats erwärmt werden.

Ein Verfahren zur Herstellung einer Verpackung ist bevorzugt, umfassend die folgenden Schritte:
a) Herstellen oder Bereitstellen eines biobasierten Polymers oder mehreren biobasierten Polymeren,
b) Herstellen oder Bereitstellen eines Polyhydroxyalkanoats oder mehrerer Polyhydroxyalkanoate,
c) Herstellen oder Bereitstellen von Fasern pflanzlicher Herkunft,
d) Compoundieren der in den Schritten a) bis c) hergestellten oder bereitgestellten Komponenten, vorzugsweise in einem Extruder, sodass eine (vorzugsweise homogene) Formmischung entsteht
   und
e) Urformen der in Schritt d) hergestellten Formmischung zu einer Verpackung, vorzugsweise mittels Spritzgießen.

Ein entsprechendes Verfahren ist erfindungsgemäß bevorzugt, wobei die Komponenten in Schritt d über die Glasübergangstemperatur (Tg) des oder sämtlicher in Schritt a) hergestellten oder bereitgestellten biobasierten Polymers und/oder des oder sämtlicher in Schritt b) hergestellten oder bereitgestellten Polyhydroxyalkanoat(e) erwärmt werden.

Ein Verfahren zur Herstellung einer Verpackung ist bevorzugt, umfassend die folgenden Schritte:
c1) Herstellen oder Bereitstellen von in der Polymerverarbeitung üblichen Additiven,
wobei die Additive ebenfalls in Schritt d) compoundiert oder in einem separaten Verfahrensschritt beigemischt werden.

Es ist erfindungsgemäß bevorzugt, dass -wie in der Polymerverarbeitung allgemein üblich -, dass in den Schritten a) und b) verwendete biobasierten Polymer bzw. Polyhydroxyalkanoat als Granulat bereitgestellt wird. Diese eingesetzten Granulate können häufig kommerziell erworben werden und umfassen üblicherweise neben dem biobasierten Polymer bzw. Polyhydroxyalkanoat auch in der Polymerverarbeitung üblicherweise eingesetzten Additive. Es ist somit erfindungsgemäß bevorzugt werden in den Schritten a) und b) Mischungen aus biobasiertem Polymer bzw. Polyhydroxyalkanoat mit in der Polymerverarbeitung üblicherweise eingesetzten Additiven eingesetzt. Diese Mischungen werden als Kunststoffe bezeichnet.

Bei den üblicherweise in der Polymerverarbeitung eingesetzten Additiven handelt es sich beispielsweise um Mittel zur Verhinderung der Degradation (Korrosion) durch Autoxidation, Alkylradikalfänger, Stabilisatoren, Kompatibilisatoren, Verarbeitungshilfsmittel, Antistatikmittel, Farbstoffe, optische Aufheller, Treibmittel, Flammschutzmittel, Füllstoffe, Verstärkungsmittel, Haftvermittler und Biozide. Dem Fachmann sind entsprechende Additive bekannt. Entsprechende Additive können auch bereits dem in den Schritten a) bis c) hergestellten oder bereitgestellten Produkten beigefügt sein. So ist es beispielsweise üblich, dass die in den Schritten a) bis c) bereitgestellten Komponenten bereits Additive in üblichen Mengen enthalten. Erst durch den Zusatz von Additiven sind viele Polymere industriell verarbeitbar. Die Mischung aus Polymer mit in der Polymerverarbeitung üblicherweise eingesetzten Additiven wird üblicherweise als Kunststoff bezeichnet.

Es ist erfindungsgemäß bevorzugt, wenn die eingesetzten Additive in der Verpackung zu mehr als 20 Gew.-%, vorzugsweise mehr als 40 Gew.-%, weiter bevorzugt zu mehr als 60 Gew.-%, weiter bevorzugt zu mehr als 80 Gew.-% aus biobasierten Bestandteilen bestehen, bestimmt nach DIN EN 16640:2017-08, Verfahren B und bezogen auf das Gesamtgewicht der erfindungsgemäßen Zusammensetzung. Erfindungsgemäß besonders bevorzugt werden nur Additive eingesetzt, die vollständig aus biobasierten Bestandteilen bestehen, bestimmt nach DIN EN 16640:2017-08, Verfahren B und bezogen auf das Gesamtgewicht aller Additive.

Zusammensetzungen sind erfindungsgemäß bevorzugt, wobei der Massenanteil an Additiven 0 bis 5,0 % beträgt, vorzugsweise 0,1 bis 3,5 % beträgt, besonders bevorzugt 0,5 bis 2,5 % beträgt, bezogen auf das Gesamtgewicht der Zusammensetzung.

Bezüglich der in einem erfindungsgemäßen Verfahren verwendeten Komponenten sei hierbei auf die Ausführungen zu den in der erfindungsgemäßen Zusammensetzung eingesetzten Komponenten verwiesen.

Ein weiterer Aspekt der vorliegenden Erfindung betrifft die Verwendung eines Polyhydroxyalkanoat, vorzugsweise eines Polyhydroxyalkanoats ausgewählt aus der Gruppe bestehend aus Poly(3-hydroxypropionat) (PHP), Poly(3-hydroxybutyrat) (PHB, P3HB) (bevorzugt ist hier das Poly-(R)-3-hydroxybutyrat), Poly(3-hydroxyvalerat), (PHV), Poly(3-hydro-xyhexanoat) (PHHx), Poly(3-hydroxyheptanoat) (PHH), Poly(3-hydroxyoctanoat) (PHO), Poly(3-hydroxynonanoat) (PHN), Poly(3-hydroxydecanoat) (PHD), Poly(3-hydroxyunde-canoat) (PHUD), Poly(3-hydroxydodecanoat) (PHDD), Poly(3-hydroxytetradecanoat) (PHTD), Poly(3-hydroxypentadecanoat) (PHPD), Poly(3-hydroxyhexadecanoat) (PHHxD), Poly(hydroxybutyrat-co-hydroxyvalerat) (PHBV), Poly((R)-3-hydroxybutyrat-co-(R)-3-hyd-roxyhexanoat) (PHBH) und Gemischen der vorgenannten Polyhydroxyalkanoate, wobei Poly(3-hydroxybutyrat) (PHB, P3HB) besonders bevorzugt ist, zur Reduktion der Sauerstoffdurchlässigkeit einer Zusammensetzung umfassend ein biobasiertes Polymer, vorzugsweise Polylactid, und Fasern pflanzlicher Herkunft.

Ein weiterer Aspekt der vorliegenden Erfindung betrifft die Verwendung einer Mischung aus A) Polyhydroxyalkanoat, vorzugsweise eines Polyhydroxyalkanoats ausgewählt aus der Gruppe bestehend aus Poly(3-hydroxypropionat) (PHP), Poly(3-hydroxybutyrat) (PHB, P3HB) (bevorzugt ist hier das Poly-(R)-3-hydroxybutyrat), Poly(3-hydroxyvalerat), (PHV), Poly(3-hydroxyhexanoat) (PHHx), Poly(3-hydroxyheptanoat) (PHH), Poly(3-hydro-xyoctanoat) (PHO), Poly(3-hydroxynonanoat) (PHN), Poly(3-hydroxydecanoat) (PHD), Poly(3-hydroxyundecanoat) (PHUD), Poly(3-hydroxydodecanoat) (PHDD), Poly(3-hydro-xytetradecanoat) (PHTD), Poly(3-hydroxypentadecanoat) (PHPD), Poly(3-hydroxyhexade-canoat) (PHHxD), Poly(hydroxybutyrat-co-hydroxyvalerat) (PHBV), Poly((R)-3-hydro-xybutyrat-co-(R)-3-hydroxyhexanoat) (PHBH) und Gemischen der vorgenannten Polyhydroxyalkanoate, wobei Poly(3-hydroxybutyrat) (PHB, P3HB) besonders bevorzugt ist, und B) Fasern pflanzlicher Herkunft zur Reduktion der Sauerstoffdurchlässigkeit eines (vorzugsweise biobasierten) Polymers, vorzugsweise Polylactids.

Die erfindungsgemäßen Verwendungen sind besonders bevorzugt, wobei ein Teil des biobasierten Polymers und/oder ein Teil der Fasern pflanzlicher Herkunft durch ein Polyhydroxyalkanoat ausgetauscht werden.

Ein weiterer Aspekt der vorliegenden Erfindung betrifft die Verwendung eines Polyhydroxyalkanoat, vorzugsweise eines Polyhydroxyalkanoats ausgewählt aus der Gruppe bestehend aus Poly(3-hydroxypropionat) (PHP), Poly(3-hydroxybutyrat) (PHB, P3HB) (bevorzugt ist hier das Poly-(R)-3-hydroxybutyrat), Poly(3-hydroxyvalerat), (PHV), Poly(3-hydro-xyhexanoat) (PHHx), Poly(3-hydroxyheptanoat) (PHH), Poly(3-hydroxyoctanoat) (PHO), Poly(3-hydroxynonanoat) (PHN), Poly(3-hydroxydecanoat) (PHD), Poly(3-hydroxyunde-canoat) (PHUD), Poly(3-hydroxydodecanoat) (PHDD), Poly(3-hydroxytetradecanoat) (PHTD), Poly(3-hydroxypentadecanoat) (PHPD), Poly(3-hydroxyhexadecanoat) (PHHxD), Poly(hydroxybutyrat-co-hydroxyvalerat) (PHBV), Poly((R)-3-hydroxybutyrat-co-(R)-3-hyd-roxyhexanoat) (PHBH) und Gemischen der vorgenannten Polyhydroxyalkanoate, wobei Poly(3-hydroxybutyrat) (PHB, P3HB) besonders bevorzugt ist, zur Reduktion der Wasserdampfdurchlässigkeit einer Zusammensetzung umfassend ein biobasiertes Polymer, vorzugsweise Polylactid, und Fasern pflanzlicher Herkunft.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Bevorzugte Ausführungsbeispiele der Erfindung sind in den Zeichnungen dargestellt und werden in der nachfolgenden Beschreibung und den Beispielen näher erläutert, wobei sich gleiche Bezugszeichen auf gleiche oder ähnliche oder funktional gleiche Komponenten beziehen.

Die Figuren zeigen, jeweils schematisch:
- Fig. 1: eine isometrische Seitenansicht eines Portionsbehälters,
- Fig. 2: einen Querschnitt durch den Portionsbehälter,
- Fig. 3: eine Sicht auf eine Unterseite des Portionsbehälters ohne Verschluss,
- Fig. 4: eine weitere isometrische Ansicht des Portionsbehälters,
- Fig. 5: einen Querschnitt durch den Portionsbehälter.

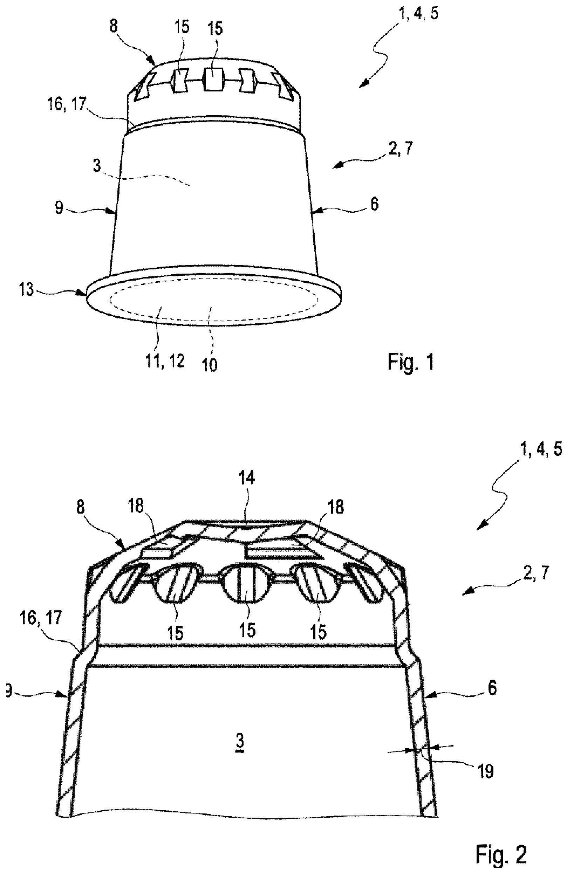

Ein Portionsbehälter 1 wie er beispielsweise in den Fig. 1 bis 5 dargestellt ist, weist einen Behälterkörper 2 auf, der in seinem Inneren ein Volumen 3 begrenzt und aus einer erfin-dungsgemäßen Zusammensetzung hergestellt ist. Das Volumen 3 dient dem Bevorraten eines nicht gezeigten Ausgangsstoffs, beispielsweise von Kaffee, insbesondere von Kaffeepulver. Im gezeigten Beispiel ist der Portionsbehälter 1 als ein Kapselbehälter 4, insbesondere als eine Kaffeekapsel 5, ausgebildet. Der Behälterkörper 2 weist eine Wandung 6 auf, die nachfolgend auch als Behälterwandung 6 bezeichnet wird und das Volumen 3 begrenzt. Im gezeigten Beispiel ist der Behälterkörper 2 als ein Topf 7 ausgebildet, der einen Topfboden 8, eine vom Topfboden 8 randseitig abstehende und umlaufend geschlossene Wandung 9, nachfolgend auch Topfwandung 9 genannt, und eine vom Topfboden 8 beabstandete, vorliegend dem Topfboden 8 gegenüberliegendem Topföffnung 10 aufweist. Die Topfwandung 9 verläuft zwischen dem Topfboden 8 und der Topföffnung 10. Vorliegend weist die Topfwandung 9 einen im Wesentlichen konischen Verlauf auf, derart, dass sich der Querschnitt des Volumens 3 vom Topfboden 8 hin zur Topföffnung 10 vergrößert. Durch die Topföffnung 10 kann der Ausgangsstoff in den Portionsbehälter 1 eingebracht und darin bevorratet werden. Nach dem Einbringen des Ausgangsstoffs wird die Topföffnung 10 mit Hilfe eines Verschlusses 11 verschlossen, der vorliegend als eine Membran 12 ausgebildet ist und vorliegend nicht aus einer erfindungsgemäßen Zusammensetzung ausgebildet ist.

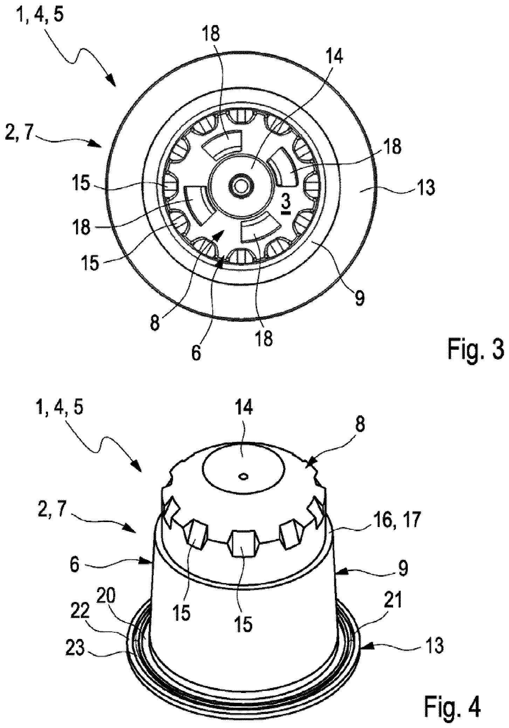

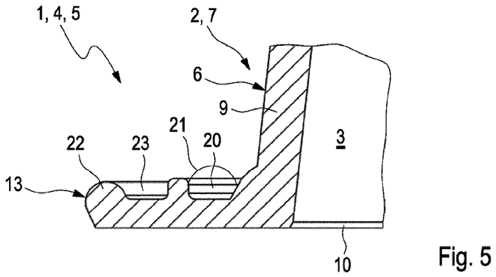

In Fig. 1 ist dabei eine isometrische Seitenansicht des Portionsbehälters, in Fig. 2 ein Querschnitt durch den Portionsbehälter 1 im Bereich des Topfbodens 8, in Fig. 3 eine untere Ansicht, d.h. eine Ansicht auf die Topföffnung 10, jedoch ohne Verschluss 11, in Fig. 4 eine weitere isometrische Ansicht des Portionsbehälters 1 und in Fig. 5 ein Querschnitt durch den Portionsbehälter 1 im Bereich Topföffnung 1, jedoch ohne Verschluss 11, dargestellt.

Der Portionsbehälter 1, insbesondere der Behälterkörper 2, weist eine die Topföffnung 10 geschlossen umgebende und von der Topfwandung 9 abstehende Schulter 13 auf. Die Schulter 13 dient insbesondere als Siegelfläche, wenn der Portionsbehälter 1 in einer komplementär ausgebildeten, nicht gezeigten Einrichtung, insbesondere einer Kaffeemaschine, eingesetzt wird. Der als Membran 12 ausgebildete Verschluss 11 ist auf der vom Topfboden 8 abgewandten Seite der Schulter 13 an der Schulter 13, beispielsweise durch Anwendung von Hitze, angebracht, insbesondere verschweißt, und somit fixiert. Der Topfboden 8 weist, wie insbesondere den Fig. 2 und 4 entnommen werden kann, eine hin zum Volumen 3 konkave Form mit einer zentralen, nach innen gerichteten, runden Senkung 14 auf. Im Übergangsbereich zwischen dem Topfboden 8 und der Topfwandung 9 und somit randseitig des Topfbodens 8 sind mehrere nach innen gerichtete Vertiefungen 15 angeordnet, welche zueinander beabstandet und gleichmäßig verteilt angeordnet sind.

Die Topfwandung 9 weist zwischen den Vertiefungen 15 und der Topföffnung 10 eine umlaufende Stufe 16 auf, die nach außen verläuft und somit zu einer Vergrößerung des Behälterkörpers 2 bzw. des Topfs 7 führt. Die Stufe 16 ist dabei als Einfallrippe 17 ausgestaltet.

Wie insbesondere den Fig. 2 und 3 zu entnehmen ist, ist im Topfboden 8 zwischen den Vertiefungen 15 und der zentralen Senkung 14 zumindest ein Durchflussabschnitt 18 vorgesehen. Im gezeigten Beispiel sind insgesamt vier solche Durchflussabschnitte 18 vorgesehen, die zueinander beabstandet und gleichmäßig angeordnet sind. Der jeweilige Durchflussabschnitt 18 weist dabei eine reduzierte Dicke 19 oder Wandstärke 19 (siehe Fig. 2 ) auf und ist, wie beispielsweise Fig. 4 entnommen werden kann, von außen nicht sichtbar. Die Durchflussabschnitte 18 dienen dem Zweck, zur Zubereitung von einem Getränk, insbesondere von Kaffee, aus dem Ausgangsstoff benötigtes Wasser in den Portionsbehälter 1 einzubringen. Sie ermöglichen es, insbesondere durch die verringerte Dicke 19, dass das Wasser vereinfacht in den Portionsbehälter 1 eingebracht werden kann. Das eingebrachte Wasser passiert durch den Ausgangsstoff und dringt anschließend über die Topföffnung 10 und den Verschluss 11 aus dem Portionsbehälter 1 und kann anschließend ausgegeben werden. Zum Durchdringen des Verschlusses 11 wird dieser in der Einrichtung mit nicht gezeigten Auslässen versehen, die in den Verschluss mechanisch und/oder durch den Druck im Wasser eingebracht werden.

Die Dicke oder Wandstärke 19 der Behälterwandung 6 bzw. der Topfwandung 9 beträgt vorzugsweise weniger als 3 mm, insbesondere 1 mm. Dementsprechend ist die Dicke in dem jeweiligen Durchflussabschnitt 18 kleiner, insbesondere kleiner als 1,0 mm.

Wie insbesondere Fig. 4 und Fig. 5 entnommen werden kann, ist auf der dem Topfboden 8 zugewandten Seite der Schulter 13 an der Topfwandung 9 angrenzend eine umlaufende Rille 20 ausgebildet, die nachfolgend auch als Innenrille 20 bezeichnet wird. Insbesondere Fig. 5 kann entnommen werden, dass die Schulter 13 an ihrem von der Topföffnung 10 entfernten Ende eine hin zum Topfboden 8 gerichtete, umlaufende Zunge 22 aufweist. Somit ist zwischen der Innenrille 20 und der Zunge 22 eine dem Verlauf der Innenrille 20 folgende und der Innenrille 20 benachbarte weitere Rille 23, nachfolgend auch als Außenrille 23 bezeichnet, ausgebildet.

Der Behälterkörper 2 ist aus einer erfindungsgemäßen Zusammensetzung, vorzugsweise durch Urformen aus einem plastischen Zustand der B erfindungsgemäßen Zusammensetzung, vorteilhaft durch Spritzgießen, hergestellt. Die erfindungsgemäße Zusammensetzung weist ein biobasiertes Polymer, bevorzugt Polylactid, auf, welches mit einem Polyhydroxyalkanoat, vorzugsweise Poly(3-hydroxybutyrat), und Fasern pflanzlicher Herkunft, vorzugsweise einer Mischung aus verschiedenen Holfasern, compoundiert ist. Das heißt, dass der Behälterkörper 2 bevorzugt durch Spritzgießen von einer erfindungsgemäßen Zusammensetzung hergestellt werden kann. Vorstellbar ist es, den Behälterkörper 2 nach dem Spritzgießen thermisch zu behandeln, d.h. für eine vorgegebene Zeit bei einer vorgegebenen Temperatur, zu erwärmen. Somit kann eine verbesserte Stabilität, des Behälterkörpers 2, insbesondere eine erhöhte Druckfestigkeit unter erhöhten Temperaturen und Drücken und bei längerer Einwirkung, erreicht werden.

Der als Membran 12 ausgebildete Verschluss 11 weist Cellulose auf, welche mit einem Biopolymer, vorzugsweise zumindest einem Polylactid, beschichtet ist, wobei der Verschluss 11 insbesondere daraus besteht. Das heißt, dass der Verschluss aus mit zumindest einem Polylactid beschichteter Cellulose bestehen kann.

In der Innenrille 20 ist eine umlaufende Dichtung 21 aufgebracht, die vorzugsweise aus einem Naturgummistoff, besonders bevorzugt aus Naturkautschuk bzw. Naturlatex, besteht. Die Dichtung 21 ist in den Fig. 4 und 5 transparent dargestellt, so dass auch die Innenrille 20 sichtbar ist. Vorstellbar ist es, auch in der Außenrille 23 eine Dichtung 21 aufzubringen, wobei bevorzugt lediglich in der Innenrille 20 eine Dichtung 21 aufgebracht ist.

Somit ist der gesamte Portionsbehälter 1 biologisch abbaubar, insbesondere kompostierbar.

### Vergleichsbeispiel 1:

Aus PLA (Polylactid) wird mittels Spritzgusses ein Behälterkörper hergestellt.

Von dem erhaltenen Behälterkörper wird die Sauerstoffdurchlässigkeit nach der Norm ISO 15105-2 (Anhang A) bei 50% rel. Luftfeuchte, 23°C und 21% O2-Sättigung bestimmt.

### Vergleichsbeispiel 2:

900 g PLA (Polylactid) und 100 g Poly(3-hydroxybutyrat) werden vermischt und in einen Extruder gegeben. Aus der Mischung wird mittels Spritzgusses ein Behälterkörper hergestellt.

Von dem erhaltenen Behälterkörper wird die Sauerstoffdurchlässigkeit nach der Norm ISO 15105-2 (Anhang A) bei 50% rel. Luftfeuchte, 23°C und 21% O2-Sättigung bestimmt. Der Behälterkörper weist eine Sauerstoffdurchlässigkeit auf, die lediglich 76 % der in Vergleichsbeispiel 1 gemessenen Sauerstoffdurchlässigkeit entspricht. Durch den Zusatz von Poly(3-hydroxybutyrat) kann die Sauerstoffdurchlässigkeit von PLA somit um 24 % reduziert werden.

### Vergleichsbeispiel 3:

500 g PLA (Polylactid) und 500 g Holzfasern werden vermischt und in einen Extruder gegeben. Aus der Mischung wird mittels Spritzgusses ein Behälterkörper hergestellt.

Von dem erhaltenen Behälterkörper wird die Sauerstoffdurchlässigkeit nach der Norm ISO 15105-2 (Anhang A) bei 50% rel. Luftfeuchte, 23°C und 21% O2-Sättigung bestimmt. Der Behälterkörper weist eine Sauerstoffdurchlässigkeit auf, die lediglich 26 % der in Vergleichsbeispiel 1 gemessenen Sauerstoffdurchlässigkeit entspricht. Durch den Zusatz von Holzfasern kann die Sauerstoffdurchlässigkeit von PLA somit um 74 % reduziert werden.

### Beispiel 1:

450 g Holfasern, 450 g PLA (Polylactid) und 100 g Poly(3-hydroxybutyrat) werden vermischt und in einen Extruder gegeben. Aus der Mischung wird mittels Spritzgusses ein Behälterkörper hergestellt.

Von dem erhaltenen Behälterkörper wird die Sauerstoffdurchlässigkeit nach der Norm ISO 15105-2 (Anhang A) bei 50% rel. Luftfeuchte, 23°C und 21% O2-Sättigung bestimmt. Der Behälterkörper weist eine Sauerstoffdurchlässigkeit auf, die lediglich 13 % der in Vergleichsbeispiel 1 gemessenen Sauerstoffdurchlässigkeit entspricht. Durch den Zusatz von Holzfasern und Poly(3-hydroxybutyrat) kann die Sauerstoffdurchlässigkeit von PLA somit um 87 % reduziert werden.

## Patentansprüche

1. Zusammensetzung umfassend oder bestehend aus
i) einem biobasierten Polymer,
ii) einem Polyhydroxyalkanoat
und
iii) Fasern pflanzlicher Herkunft,
wobei der Massenanteil an Polyhydroxyalkanoat 0,5 bis 30 % beträgt, bezogen auf das Gewicht der Zusammensetzung.

2. Zusammensetzung nach Anspruch 1, wobei es sich bei dem biobasierten Polymer um ein Polymer handelt, ausgewählt aus der Gruppe bestehend aus Polylactid (PLA), Polybutylensuccinat (PBS), Polyethylen (Bio-PE), Polyethylenterephthalat (Bio-PET), Polypropylen (Bio-PP), Polytrimethylenterephthalat (PTT), Polyamid (PA), Polyurethan (PU), Thermoplastische Stärke (TPS), Thermoplastische Elastomere (TPE), Celluloseacetat (CA) und Polyethylenfuranoat (PEF).

3. Zusammensetzung nach einem der vorherigen Ansprüche, wobei der Massenanteil des biobasierten Polymers 20 bis 80 % beträgt, vorzugsweise 30 bis 70 % beträgt, besonders bevorzugt 35 bis 60 % beträgt, bezogen auf das Gewicht der Zusammensetzung.

4. Zusammensetzung nach einem der vorherigen Ansprüche, wobei der Massenanteil an Polyhydroxyalkanoat 1 bis 20 % beträgt, besonders bevorzugt 2 bis 15 % beträgt, bezogen auf das Gewicht der Zusammensetzung.

5. Zusammensetzung nach einem der vorherigen Ansprüche, wobei der Massenanteil an Fasern pflanzlicher Herkunft 5 bis 80 % beträgt, vorzugsweise 15 bis 75 % beträgt, besonders bevorzugt 35 bis 65 % beträgt, bezogen auf das Gewicht der Zusammensetzung.

6. Zusammensetzung nach einem der vorherigen Ansprüche, wobei das Polyhydroxyalkanoat ausgewählt ist aus der Gruppe bestehend aus Poly(3-hydroxypropionat) (PHP), Poly(3-hydroxybutyrat) (PHB, P3HB) (bevorzugt ist hier das Poly-(R)-3-hydroxybutyrat), Poly(3-hydroxyvalerat), (PHV), Poly(3-hydroxyhexanoat) (PHHx), Poly(3-hydroxyheptanoat) (PHH), Poly(3-hydroxyoctanoat) (PHO), Poly(3-hydroxynonanoat) (PHN), Poly(3-hydroxydecanoat) (PHD), Poly(3-hydroxyundecanoat) (PHUD), Poly(3-hydroxydodecanoat) (PHDD), Poly(3-hydroxytetradecanoat) (PHTD), Poly(3-hydroxypentadecanoat) (PHPD), Poly(3-hydroxyhexadecanoat) (PHHxD), Po-ly(hydroxybutyrat-co-hydroxyvalerat) (PHBV), Poly((R)-3-hydroxybutyrat-co-(R)-3-hydroxyhexanoat) (PHBH) und Gemischen der vorgenannten Polyhydroxyalkanoate, wobei als Polyhydroxyalkanoat Poly(3-hydroxybutyrat) (PHB, P3HB) bevorzugt ist.

7. Zusammensetzung nach einem der vorherigen Ansprüche, wobei die Fasern pflanzlicher Herkunft ausgewählt sind aus der Gruppe bestehend aus Holzfasern, Regeneratfasern, Zellstofffasern, Samenfasern, Bastfasern und Hartfasern.

8. Zusammensetzung nach Anspruch 7, wobei es sich bei den Holzfasern um Nadelholz-, Laubholz-, Strohzellstofffasern oder Mischungen daraus handelt.

9. Zusammensetzung nach einem der vorherigen Ansprüche, wobei die die Fasern pflanzlicher Herkunft Lignocellulose umfassen oder aus Lignocellulose bestehen.

10. Zusammensetzung nach einem der vorherigen Ansprüche, wobei die Zusammensetzung zu mehr als 20 Gew.-%, vorzugsweise mehr als 40 Gew.-%, weiter bevorzugt zu mehr als 60 Gew.-%, weiter bevorzug zu mehr als 80 Gew.-% aus biobasierten Bestandteilen besteht, bestimmt nach DIN EN 16640:2017-08, Verfahren B und bezogen auf das Gesamtgewicht der Zusammensetzung.

11. Verpackung bestehend aus oder umfassend eine Zusammensetzung nach einem der Ansprüche 1 bis 10.

12. Verpackung nach Anspruch 11, wobei es sich bei der Verpackung um einen Portionsbehälter (1) zum Bevorraten eines Ausgangsstoffs, insbesondere zur Zubereitung eines Getränks aus einem Getränkeausgangsstoff durch Durchfluss von Wasser durch den Portionsbehälter (1), mit einem Behälterkörper (2) handelt, der ein Volumen (3) zum Bevorraten des Ausgangsstoffs begrenzt.

13. Verwendung eines Polyhydroxyalkanoats zur Reduktion der Sauerstoffdurchlässigkeit einer Mischung umfassend ein biobasiertes Polymer und Fasern pflanzlicher Herkunft.

14. Verwendung einer Zusammensetzung nach einem der Ansprüche 1 bis 10 zum Verpacken von Lebensmitteln (insbesondere Kaffee und Tee), Kosmetika, Medizinprodukten, Nahrungsergänzungsmitteln, Agrarprodukten, Konsumgütern und chemischen Erzeugnissen.

15. Verfahren zur Herstellung eines Verpackungsmaterials umfassend die folgenden Schritte:
a) Herstellen oder Bereitstellen eines Polylactids,
b) Herstellen oder Bereitstellen eines Polyhydroxyalkanoat,
c) Herstellen oder Bereitstellen von Fasern pflanzlicher Herkunft,
d) Compoundieren der in den Schritten a) bis c) hergestellten oder bereitgestellten Komponenten, vorzugsweise in einem Extruder, sodass eine Formmischung entsteht,
e) Urformen der in Schritt d) hergestellten Formmischung zu einem Verpackungsmaterial, vorzugsweise mittels Spritzgießen,
wobei der Massenanteil an Polyhydroxyalkanoat 0,5 bis 30 % beträgt, bezogen auf das Gewicht der in Schritt d) hergestellten Formmischung.

## Claims

1. A composition comprising or consisting of:
i) a bio-based polymer,
ii) a polyhydroxyalkanoate,
and
iii) fibers of plant origin,
wherein the mass fraction of the polyhydroxyalkanoate is 0.5 to 30%, based on the weight of the composition.

2. The composition according to claim 1, wherein the bio-based polymer is selected from the group consisting of polylactic acid (PLA), polybutylene succinate (PBS), polyethylene (Bio-PE), polyethylene terephthalate (Bio-PET), polypropylene (Bio-PP), polytrimethylene terephthalate (PTT), polyamide (PA), polyurethane (PU), thermoplastic starch (TPS), thermoplastic elastomers (TPE), cellulose acetate (CA), and polyethylene furanoate (PEF).

3. The composition according to any of the preceding claims, wherein the mass fraction of the bio-based polymer is 20 to 80%, preferably 30 to 70%, more preferably 35 to 60%, based on the weight of the composition.

4. The composition according to any of the preceding claims, wherein the mass fraction of the polyhydroxyalkanoate is 1 to 20%, more preferably 2 to 15%, based on the weight of the composition.

5. The composition according to any of the preceding claims, wherein the mass fraction of fibers of plant origin is 5 to 80%, preferably 15 to 75%, more preferably 35 to 65%, based on the weight of the composition.

6. The composition according to any of the preceding claims, wherein the polyhydroxyalkanoate is selected from the group consisting of poly(3-hydroxypropionate) (PHP), poly(3-hydroxybutyrate) (PHB, P3HB) (preferably poly-(R)-3-hydroxybutyrate), poly(3-hydroxyvalerate) (PHV), poly(3-hydroxyhexanoate) (PHHx), poly(3-hydroxyheptanoate) (PHH), poly(3-hydroxyoctanoate) (PHO), poly(3-hydroxynonanoate) (PHN), poly(3-hydroxydecanoate) (PHD), poly(3-hydroxyundecanoate) (PHUD), poly(3-hydroxydodecanoate) (PHDD), poly(3-hydroxytetradecanoate) (PHTD), poly(3-hydroxypentadecanoate) (PHPD), poly(3-hydroxyhexadecanoate) (PHHxD), poly(hydroxybutyrate-co-hydroxyvalerate) (PHBV), poly((R)-3-hydroxybutyrate-co-(R)-3-hydroxyhexanoate) (PHBH), and mixtures of the aforementioned polyhydroxyalkanoates, with poly(3-hydroxybutyrate) (PHB, P3HB) being preferred.

7. The composition according to any of the preceding claims, wherein the fibers of plant origin are selected from the group consisting of wood fibers, regenerated fibers, cellulose fibers, seed fibers, bast fibers, and hard fibers.

8. The composition according to claim 7, wherein the wood fibers are softwood, hardwood, straw cellulose fibers, or mixtures thereof.

9. The composition according to any of the preceding claims, wherein the fibers of plant origin comprise or consist of lignocellulose.

10. The composition according to any of the preceding claims, wherein the composition consists of more than 20% by weight, preferably more than 40% by weight, more preferably more than 60% by weight, even more preferably more than 80% by weight, of bio-based components, determined according to DIN EN 16640:2017-08, Method B, and based on the total weight of the composition.

11. A packaging comprising or consisting of a composition according to any of claims 1 to 10.

12. The packaging according to claim 11, wherein the packaging is a portion container (1) for storing a starting material, in particular for preparing a beverage from a beverage starting material by flowing water through the portion container (1), with a container body (2) that defines a volume (3) for storing the starting material.

13. Use of a polyhydroxyalkanoate to reduce the oxygen permeability of a mixture comprising a bio-based polymer and fibers of plant origin.

14. Use of a composition according to any of claims 1 to 10 for packaging food products (in particular coffee and tea), cosmetics, medical devices, dietary supplements, agricultural products, consumer goods, and chemical products.

15. A process for producing a packaging material comprising the following steps:
a) producing or providing polylactic acid,
b) producing or providing a polyhydroxyalkanoate,
c) producing or providing fibers of plant origin,
d) compounding the components produced or provided in steps a) to c), preferably in an extruder, to form a molding mixture,
e) shaping the molding mixture produced in step d) into a packaging material, preferably by injection molding,
wherein the mass fraction of the polyhydroxyalkanoate is 0.5 to 30%, based on the weight of the molding mixture produced in step d).

## Revendications

1. Composition comprenant ou consistant en:
i) un polymère biosourcé,
ii) un polyhydroxyalkanoate,
et
iii) des fibres d'origine végétale,
dans laquelle la fraction massique du polyhydroxyalkanoate est de 0,5 à 30%, basée sur le poids de la composition.

2. Composition selon la revendication 1, dans laquelle le polymère biosourcé est choisi dans le groupe constitué de l'acide polylactique (PLA), du succinate de polybutylène (PBS), du polyéthylène (Bio-PE), du polyéthylène téréphtalate (Bio-PET), du polypropylène (Bio-PP), du polytriméthylène téréphtalate (PTT), du polyamide (PA), du polyuréthane (PU), de l'amidon thermoplastique (TPS), des élastomères thermoplastiques (TPE), de l'acétate de cellulose (CA), et du furanoate de polyéthylène (PEF).

3. Composition selon l'une des revendications précédentes, dans laquelle la fraction massique du polymère biosourcé est de 20 à 80%, de préférence de 30 à 70%, plus préférentiellement de 35 à 60%, basée sur le poids de la composition.

4. Composition selon l'une des revendications précédentes, dans laquelle la fraction massique du polyhydroxyalkanoate est de 1 à 20%, plus préférentiellement de 2 à 15%, basée sur le poids de la composition.

5. Composition selon l'une des revendications précédentes, dans laquelle la fraction massique des fibres d'origine végétale est de 5 à 80%, de préférence de 15 à 75%, plus préférentiellement de 35 à 65%, basée sur le poids de la composition.

6. Composition selon l'une des revendications précédentes, dans laquelle le polyhydroxyalkanoate est choisi dans le groupe constitué de poly(3-hydroxypropionate) (PHP), poly(3-hydroxybutyrate) (PHB, P3HB) (de préférence le poly-(R)-3-hydroxybutyrate), poly(3-hydroxyvalérate) (PHV), poly(3-hydroxyhexanoate) (PHHx), poly(3-hydroxyheptanoate) (PHH), poly(3-hydroxyoctanoate) (PHO), poly(3-hydroxynonanoate) (PHN), poly(3-hydroxydecanoate) (PHD), poly(3-hydroxyundécanoate) (PHUD), poly(3-hydroxydodécanoate) (PHDD), poly(3-hydroxytétradécanoate) (PHTD), poly(3-hydroxypentadécanoate) (PHPD), poly(3-hydroxyhexadécanoate) (PHHxD), poly(hydroxybutyrate-co-hydroxyvalérate) (PHBV), poly((R)-3-hydroxybutyrate-co-(R)-3-hydroxyhexanoate) (PHBH), et des mélanges des polyhydroxyalkanoates précités, le poly(3-hydroxybutyrate) (PHB, P3HB) étant préféré.

7. Composition selon l'une des revendications précédentes, dans laquelle les fibres d'origine végétale sont choisies dans le groupe constitué de fibres de bois, de fibres régénérées, de fibres de cellulose, de fibres de graines, de fibres de liber, et de fibres dures.

8. Composition selon la revendication 7, dans laquelle les fibres de bois sont des fibres de bois résineux, de bois feuillu, de paille de cellulose, ou des mélanges de celles-ci.

9. Composition selon l'une des revendications précédentes, dans laquelle les fibres d'origine végétale comprennent ou sont constituées de lignocellulose.

10. Composition selon l'une des revendications précédentes, dans laquelle la composition consiste en plus de 20 % en poids, de préférence plus de 40 % en poids, plus préférentiellement plus de 60 % en poids, encore plus préférentiellement plus de 80 % en poids, de composants biosourcés, déterminés selon la norme DIN EN 16640:2017-08, méthode B, et basée sur le poids total de la composition.

11. Emballage comprenant ou consistant en une composition selon l'une des revendications 1 à 10.

12. Emballage selon la revendication 11, dans lequel l'emballage est un récipient à portion (1) pour stocker un matériau de départ, en particulier pour préparer une boisson à partir d'un matériau de départ de boisson par passage d'eau à travers le récipient à portion (1), avec un corps de récipient (2) qui délimite un volume (3) pour stocker le matériau de départ.

13. Utilisation d'un polyhydroxyalkanoate pour réduire la perméabilité à l'oxygène d'un mélange comprenant un polymère biosourcé et des fibres d'origine végétale.

14. Utilisation d'une composition selon l'une des revendications 1 à 10 pour emballer des denrées alimentaires (notamment du café et du thé), des cosmétiques, des dispositifs médicaux, des compléments alimentaires, des produits agricoles, des biens de consommation et des produits chimiques.

15. Procédé de fabrication d'un matériau d'emballage comprenant les étapes suivantes:
a) production ou fourniture d'acide polylactique,
b) production ou fourniture d'un polyhydroxyalkanoate,
c) production ou fourniture de fibres d'origine végétale,
d) compoundage des composants produits ou fournis aux étapes a) à c), de préférence dans un extrudeur, de manière à obtenir un mélange formé,
e) moulage du mélange formé produit à l'étape d) en un matériau d'emballage, de préférence par moulage par injection,
dans lequel la fraction massique du polyhydroxyalkanoate est de 0,5 à 30 %, basée sur le poids du mélange formé produit à l'étape d).
